# EUROPEAN PATENT SPECIFICATION

(11) **EP 2 919 403 B1**
(45) Date of publication and mention of the grant of the patent: **11.01.2017**
(21) Application number: 13852747.8
(22) Date of filing: 14.10.2013
(51) Int. Cl.: H04B 1/712

(54) **MULTI-PATH COMBINATION METHOD, DEVICE AND MOBILE COMMUNICATION SYSTEM**
MEHRPFADKOMBINATIONSVERFAHREN, VORRICHTUNG UND MOBILKOMMUNIKATIONSSYSTEM
PROCÉDÉ DE COMBINAISON MULTI-TRAJETS, DISPOSITIF ET SYSTÈME DE COMMUNICATION MOBILE

(30) Priority: 07.11.2012 CN 201210439925
(43) Date of publication of application: 16.09.2015
(73) Proprietor: ZTE Corporation, Shenzhen, Guangdong 518057 (CN); ZTE Microelectronics Technology Co., Ltd, Shenzhen (CN)
(72) Inventor: SUN, Yantao, Shenzhen Guangdong 518057 (CN)
(74) Representative: Lavoix
(86) International application number: PCT/CN2013/085191
(87) International publication number: WO 2014/071792

(56) References cited:
- EP-A2- 0 893 888
- WO-A1-01/73983
- CN-A- 1 404 249
- CN-A- 1 474 528
- CN-A- 1 645 759

## Description

### TECHNICAL FIELD

The disclosure relates to mobile communication technology and in particular to a method, apparatus and mobile communication system of multi-path combination.

### BACKGROUND

Since signal transmission between a mobile terminal and a communication base station is implemented via multiple paths, during communication between the mobile terminal and the communication base station, time differences exist among times at which the signal via different paths arrive at the communication base station. When the time difference becomes greater than 0.26 microseconds (ms), the communication base station is capable of differentiate and combine the multi-path components. Diversity techniques mean that the communication base station receives multiple fading-independent signals simultaneously and combines these independent multi-path signals to obtain a diversity gain, so as to get a better demodulation capacity.

In diversity techniques, signal energies from different branches are combined by accumulation. The combination approaches mainly include selective combination, equal-gain combination and maximum-ratio combination, among which the maximum-ratio combination can achieve a better combination effect than the other two combination approaches. For performing accumulation, each reception branch is assigned with a fixed weighting coefficient. When the communication service is being provided, the communication signals received via the branches are accumulated with their respective fixed weighting coefficients. However, there is a problem that lies within in assigning fixed weighting coefficients: if one of the branches has a large weighting coefficient, and there is no signal received or a very weak signal received via this branch, the final combination effect would be significantly reduced, thus greatly affecting user experience.

The document EP 0 893 888 A2 describes a symbol synthesis technology, in particular, a RAKE receiver including an arithmetic circuit for weighting coefficients. Specifically, the weighting coefficients are calculated on the basis of the signal powers for one path and the interference powers for other paths. Then, the weighting coefficients are respectively supplied to the weighting multipliers, thereby weighting the reception signals from the respective paths. Finally, the symbol synthesizer performs symbol synthesis of the resultant signals.

### SUMMARY

According to various embodiments of the disclosure, a multi-path combination method, apparatus and mobile communication system are provided, which may address the problem of poor combination effect of the branch signals resulted by the fixed weighting coefficients assigned for the branches.

The features of the method and device according to the present invention are defined in the independent claims, and the preferable features according to the present invention are defined in the dependent claims.

In the embodiments of the disclosure, the weighting coefficient of the branch is determined according to the channel parameter of the branch and the communication signal received via the branch. In this way, the determined weighting coefficient is synchronized with the channel parameter of the branch and change of the communication signal received via the branch. Accordingly, the embodiments of the disclosure provide a better combination effect compared with those provided in the related art.

### BRIEF DESCRIPTION OF THE DRAWINGS

Fig. 1 is a structural diagram of a mobile communication system 1 in the embodiments of the disclosure;
Fig. 2 is a structural diagram of a communication base station 11 in the embodiments of the disclosure;
Fig. 3 is a structural diagram of an apparatus of multi-path reception and combination 111 in the embodiments of the disclosure;
Fig. 4 is a structural diagram of a weighting coefficient calculation module 1112 in the embodiments of the disclosure;
Fig. 5 is a structural diagram of a multi-path combination module 1113 in the embodiments of the disclosure;
Fig. 6 is a first flow chart of a method of multi-path reception and combination in the embodiments of the disclosure;
Fig. 7 is a second flow chart of a method of multi-path reception and combination in the embodiments of the disclosure.

### DETAILED DESCRIPTION

For the currently used multi-path reception and combination technique in the mobile communication field, each of the branches is assigned with a fixed weighting coefficient to implement maximum-ratio combination. Such a combination approach has the following problem: if one of the branches has a large weighting coefficient, and there is no signal received or a very weak signal received via this branch, the final combination effect would be significantly reduced, thus greatly affecting user experience. In order to address the problem resulted by the fixed weighting coefficients assigned for the branches, a multi-path combination method, apparatus and mobile communication system are provided according to various embodiments of the disclosure. The subject matter of the disclosure will be described in detail in connection with the specific embodiments referring to the figures.

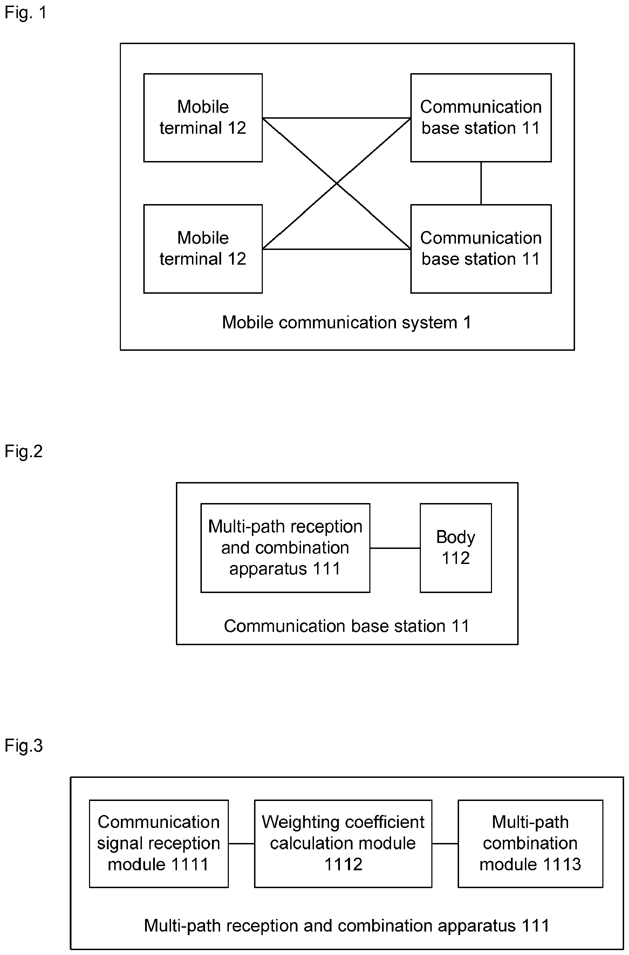

Fig. 1 is a structural diagram of a mobile communication system 1 in the embodiemens of the disclosure. As shown in Fig. 1, the mobile communication system 1 provided in the embodiments of the disclosure comprises at least one communication base station (BS) 11 and at least one mobile terminal 12 communicating with the communication BS 11; in which
when the mobile terminal 12 communicates with the communication BS 11, the trasmission of communication signal is performed via at least two branches. The transmitted communication signal comprises pilot communication signal, non-pilot communication signal, etc., and the mobile terminal 12 may be a device such as cell phone, palm digital assistant (PDA). It can be foreseen that multiple communication BSs 11 may also communicate with each other.

Wherein, Fig. 2 is a structural diagram of a communication base station 11 in the embodiments of the disclosure. As shown in Fig. 2, the communication BS 11 comprises an apparatus of multi-path reception and combination 111 and a body 112, in which
the body 112 is configured to implement basic communication functions of the communication BS 11, for example, receiving communication signal, forwarding communication signal and the like;
the apparatus of multi-path reception and combination 111 is configured to combine the communication signals received via the respective branches; the communication BS 11 receives and processes the communication signals sent from the mobile terminal 12 using the apparatus of multi-path reception and combination 111.

Fig. 3 is a structural diagram of an apparatus of multi-path reception and combination 111 in the embodiments of the disclosure. As shown in Fig. 3, the apparatus of multi-path reception and combination 111 includes a communication signal reception module 1111, a weighting coefficient calculation module 1112 and a multi-path combination module 1113 which are connected in sequence; in which
the communication signal reception module 1111 is configured to receive a communication signal sent from a mobile terminal 12 via a plurality of branches;
the weighting coefficient calculation module 1112 is configured to calculation a weighting coefficient of the branch using the communication signal received via the branch according to a channel parameter of the branch in turn;
the multi-path combination module 1113 is configured to perform Maximum-Ratio Combination on the communication signal received via the respective branches using the weighting coefficients of the respective branches.

In practical applications, the communication signal reception module 1111 may be implemented with a receiver in the apparatus of multi-path reception and combination 111;

The weighting coefficient calculation module 1112 and the multi-path combination module 1113 may be implemented with a Central Processing Unit (CPU), a Digital Signal Processor (DSP) or a Field Programmable Gate Array (FPGA).

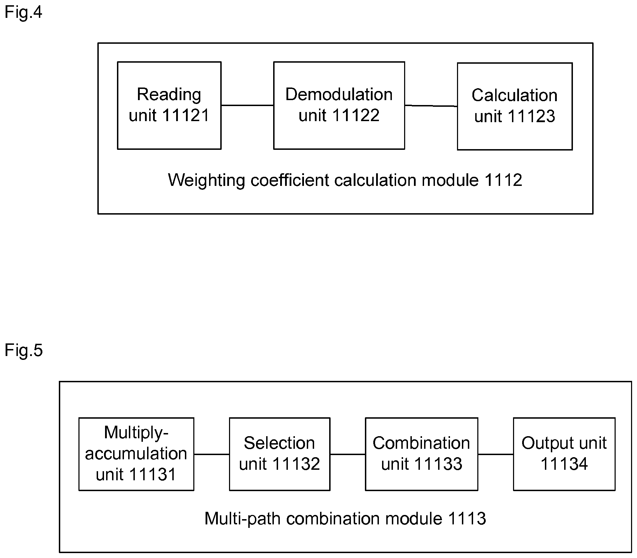

Fig. 4 is a structural diagram of a weighting coefficient calculation module 1112 in the embodiments of the disclosure. As shown in Fig. 4, the weighting coefficient calculation module 1112 comprising a reading unit 11121, a demodulation unit 11122 and a calculation unit 11123 which are connected in sequence; in which
the reading unit 11121 is configured to read a channel parameter of the branch and to send the channel parameter to the demodulation unit 11122;
the demodulation unit 11122 is configured to descramble and despread the communication signal received via the branch according to the channel parameter read by the read unit 11121, and to send the communication signal which has been processed to the calculation unit 11123;
the calculation unit 11123 is configured to perform channel estimation on the communication signal which has been processed by the demodulation unit 11122, and to regard a channel estimation value obtained from the channel estimation as the weighting coefficient of the branch.

In the embodiments of the disclosure, the channel parameter comprises the channel type and/or channel mode of the channel in which the branch operates.

In practical applications, the reading unit 11121 and the calculation unit 11123 may be implemented with a CPU, DSP or FPGA in the apparatus of multi-path reception and combination 111;

The demodulation unit 11122 may be implemented with a demodulator in the apparatus of multi-path reception and combination 111.

The object of the embodiments of the disclosure consists in detemining weighting coefficient of the branch dynamically. Therefore, an embodiment of the disclosure provides a most preferred implementation for determining the weighting coefficient, in which the calculation unit 11123 determines the weighting coefficient of the branch in the manner as below:
M channel estimation values in frequency domain of a communication user in pilot positions using a pilot demodulation reference signal in frequency domain in a received communication signal and a local pilot demodulation reference signal in frequency domain, M being the amount of pilot sub-carriers;
R values extracted from the M channel estimation values in frequency domain are used to spread the M channel estimation values in frequency domain, so as to obtain (M+R) channel estimation values in frequency domain, R being interger multiple of the number of users carried on a same time and frequency Resource Block (RB);
   the (M+R) channel estimation values in frequency domain are transformed into time domain to obtain (M+R) channel estimation values in time domain;
   noise reduction is performed on the (M+R) channel estimation values in time domain using a channel estimation window of the communication user, so as to obtain (M+R) channel estimation values in time domain with reduced noise;
   the (M+R) channel estimation values in time domain with reduced noise are transformed into frequency domain, a channel estimation value on effective sub-carriers are extracted from the channel estimation values in frequency domain, and the extracted channel estimation value is regarded as the weighting coefficient of the branch.

In the embodiments of the disclosure, after the weighting coefficients of the respective branches are obtained, the communication signal received via the branches is combined using the weighting coefficients. With respect to the Maximum-Ratio Combination, an embodiment of the disclosure provides a most preferred implementation. Fig. 5 is a structural diagram of a multi-path combination module 1113 in the embodiments of the disclosure. As shown in Fig. 5, the multi-path combination module 1113 comprises a multiply and add (MAC) unit 11131, a selection unit 11132, a combination unit 11133 and an output unit 11134, in which
the MAC unit 11131 is configured to perform a complex MAC processing between the weighting coefficient calculated by the calculation unit 11123 and the communication signal received via the branch, and to send the obtain communication signal to the selection unit 11134 for selecting;
the selection unit 11132 is configured to select the real or imaginary part of the communication signal according to the channel parameter of the branch. For example, when the channel type of the channel in which the branch operates is a channel of Dedicated Physical Control CHannel (DPCCH) type, since the communication signal is in Q path, the imaginary part of the communication signal is selected; and for the same reason, when the channel type of the channel in which the branch operates is a channel of Enhanced-Dedicated Physical Control CHannel (E-DPCCH) type, since the communication signal is in I path, the real part of the communication signal is selected; when the channel type of the channel in which the branch operates is a channel of High Speed Dedicated Physical Control CHannel (HS-DPCCH) type, since the communication signal is in Q path, the imaginary part of the communication signal is selected;
the combination unit 11132 is configured to accumulate all of the communication signals selected by the selection unit 11132, and to send the result of accumulation to the output unit 11134;
the output unit 11134 is configured to perform truncation and saturation processing on the result of accumulation sent from the combination unit 11132, and to output a maximum-ratio combination symbol with regulated bit width, the maximum-ratio combination of the communication channel terminating.

In practical applications, the MAC unit 11131, the selection unit 11132, the combination unit 11133 and the output unit 11134 may be implemented with a CPU, DSP or FPGA in the apparatus of multi-path reception and combination 111.

It can be foreseen that, in this context, various function modules in the embodiments described above may be combined and/or substitued, all of the implementations thus formed are the technical schemas recorded in the embodiments of the disclosure.

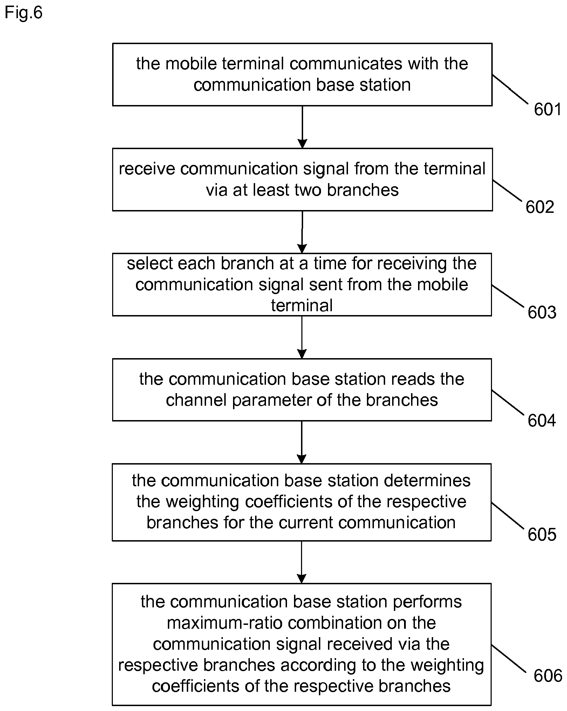

An embodiment of the disclosure also provides a method of multi-path reception and combination. Fig. 6 is a first flow chart of a method of multi-path reception and combination in the embodiments of the disclosure. As shown in Fig. 6, the method of multi-path reception and combination includes steps as following:
Step 601: a mobile terminal communicates with a communication BS.
Step 602: the communication BS receives communication signals sent from the mobile terminal via at least two paths.

The communicatioin BS calculates the number of branches used by receiving the communication signal sent from the mobile terminal according to its processing capacity and operating cost, so as to satisfy the index of communication performance. This embodiment takes the reception of the communication signal sent from the mobile terminal via 8 branches by the communication BS as an illustrative example.

Step 603: the communication BS selects, from a plurality of branches, each branch at a time, for receiving a communication signal sent from the mobile terminal.

Wherein, during receving, from a plurality of branches, each branch a time, the communication BS selects randomly or in descending order of the weighting coefficients in previous communication. Since each branch is selected to determine its corresponding weighting coefficient, the order in selecting branches has no influence on the final output result.

Step 604: the communication BS read a channel parameter of the branch.

The channel parameter includes the channel type and/or channel mode of the channel in which the branch operates. The channel type includes the channel type of DPCCH, HS-DPCCH, E-DPCCH and the like, the channel mode comprises Boosting mode and non-Boosting mode of HS-DPCCH, pilot mode and non-pilot mode of the DPCCH channel.

Step 605: the communication BS determines a weighting coefficient of the branch in this communication.

The communication BS determines the weighting coefficient of the branch in this communication according to the channel parameter of the branch and the communication signal received via the branch.

Step 606: the communication BS perform the maximum-ratio combination on the communication signal of the respective branches according to the weighting coefficient.

In a preferred implement, Step 605 is implemented by following steps:
descramble and despread the communication signal received via the branch according to the channel parameter of the branch;
perform channel estimation on the communication signal which has been descrambled and despread, and to regard a channel estimation value obtained from the channel estimation as the weighting coefficient of the branch.

The implementation of Step 605 is further illustrated below in combination with different channel types:
1) when the channel type of the channel in which the branch operates is a DPCCH channel, in one preferred implementation in Step 605,
   descramble and despread the communication signal received via the branch;
   perform coarse channel estimation on the communication signal which as been descrambled and despread;
   select corresponding coarse channel estimation value as the weighting coefficient of the branch according to the channel mode of the channel.
   Wherein, when the channel type of the channel in which the branch operates is a DPCCH channel, the channel mode of the branch includes pilot mode and non-pilot mode. When the channel mode is the pilot mode, the pilot coarse channel estimation value is selected as the weighting coefficient of the branch; when the channel mode is the non-pilot mode, the non-pilot coarse channel estimation value is selected as the weighting coefficient of the branch.
2) when the channel type of the channel in which the branch operates is an E-DPCCH channel, in one preferred implementation of Step 605,
   descramble and despread the communication signal received via the branch; perform accurate channel estimation on the communication signal which as been descrambled and despread;
   regard the accurate channel estimation value as the weighting coefficient of the branch.
3) when the channel type of the channel in which the branch operates is an HS-DPCCH channel, in one preferred implementation of Step 605,
   determine whether the branch is in Boosting channel mode;
   if the branch is in Boosting channel mode, receive a ratio parameter issued from an external device to be the weighting coefficient of the branch;
   otherwise, descramble and despread the communication signal received via the branch, perform accurate channel estimation on the commincation which has been descrambled and despread, and regard the obtained accurate channel estimation value as the weighting coefficient of the branch.

The method of multi-path reception and combination in the embodiments of the disclosure is further described in detail in combination with an application scene. In this embodiment, a communication BS receives communication signals sent from a mobile terminal via 8 branches, the communication signals being designated as L1, L2, L3,...,L8 respectively; and channel parameters (channel type and channel mode) of the channels in which the 8 branches operate are in conformity. As described above, each branch may be classified into 5 types according to different channel parameter of the branch, i.e., A type: the channel type of the channel in which the branch operates is DPCCH channel and the corresponding channel mode is pilot mode; B type: the channel type of the channel in which the branch operates is DPCCH channel and the corresponding channel mode is non-pilot mode; C type: the channel type of the channel in which the branch operates is E-DPCCH channel; D type: the channel type of the channel in which the branch operates is HS-DPCCH channel and the corresponding channel mode is Boosting mode; E type: the channel type of the channel in which the branch operates is HS-DPCCH channel and the corresponding channel mode is not Boosting mode.

The communication BS receives signals inputted from the 8 branches with respective amplitudes: R1, R2, R3, R4,...,R7, R8; and the apparatus of multi-path reception and combination outputs a combined signal with amplitude R:
R = K1 * R1 + K2 * R2 +......+ K8 * R8; K1 to K8 in the formula correspond to the weighting coefficients of branches R1 to R8 respectively.

The determination of the weighting coefficients K1 to K8 in above formula is described below in detail. The combination procedure after the acquisition of the weighting coefficients of the branches has been described in detail in the description of the structure of the multi-path combination module 1113 in the embodiment described above and will not be discussed again.

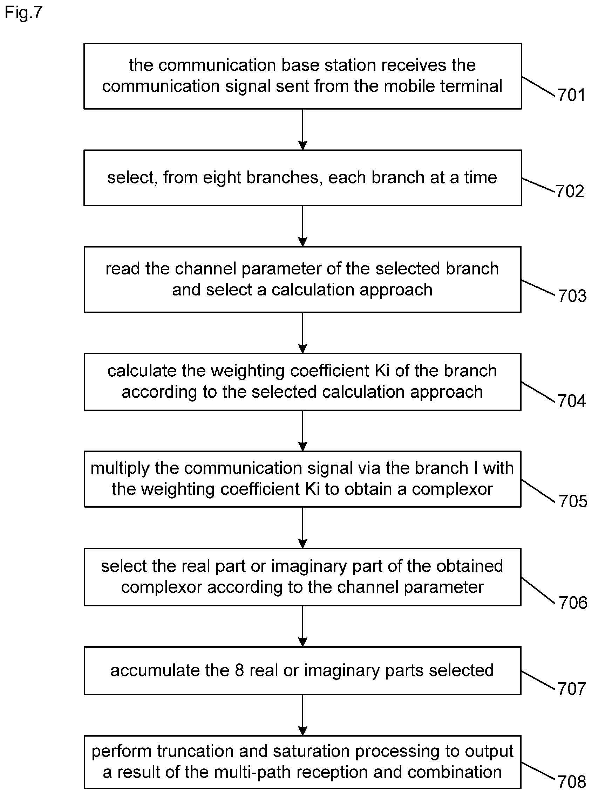

Fig. 7 is a second flow chart of a method of multi-path reception and combination in the embodiments of the disclosure. As shown in Fig. 7, the determination procedure of the weighting coefficients includes the steps as following:
Step 701: a communication BS receives communication signals sent from the mobile terminal via 8 paths.
Step 702: select, from the 8 branches, branch i at a time.
Step 703: read the channel parameter of the selected branch i and select a calculation approach.

When the branch i is of A type, the corresponding calculation approach is: descrambling and despreading the communication signal received via the branch, performing coarse channel estimation on the communication signal which has been descrambled and despread, and regarding the obtained pilot coarse channel estimation value as the weighting coefficient of the branch;
when the branch i is of B type, the corresponding calculation approach is: descrambling and despreading the communication signal received via the branch, performing coarse channel estimation on the communication signal which has been descrambled and despread, and regarding the obtained non-pilot coarse channel estimation value as the weighting coefficient of the branch;
when the branch i is of C type, the corresponding calculation approach is: descrambling and despreading the communication signal received via the branch, performing accurate channel estimation on the communication signal which has been descrambled and despread, and selecting this accurate channel estimation value as the weighting coefficient of the branch;
when the branch i is of D type, the corresponding calculation approach is: receiving a ratio parameter issued from an external device to be the weighting coefficient of the branch;
when the branch i is of E type, the corresponding calculation approach is: descrambling and despreading the communication signal received via the branch, performing accurate channel estimation on the communication signal which has been descrambled and despread, and regarding the obtained accurate channel estimation value as the weighting coefficient of the branch.

Step 704: calculate the weigting coefficient Ki of the branch i according to the selected calculation approach.

Step 705: perform multiply and add (MAC) calculation of the communication and the weighting coefficient Ki of the branch i to obtain a complexor.

Step 706: select the real part or imaginary part of the obtained complexor according to the channel parameter.

As for the branch of the type of DPCCH or HS-DPCCH, since the complex communication signal is in Q path, the imaginary part of the complexor is selected as the factor for accumulative sum.

Step 707: accumulate the 8 real or imaginary parts selected.

Step 708: perform trunction and saturation processing on the accumulative sum to output a result of the multi-path reception and combination.

The embodiments of the disclosure have at least the following remarkable progress:
the weighting coefficient of the branch is determined according to the channel parameter of the branch and the communication signal received via the branch. In this way, the determined weighting coefficient is synchronized with the channel parameter of the branch and change of the communication signal received via the branch. Accordingly, the embodiments of the disclosure provide a better combination effect compared with those provided in the related art.

Obviously, those skilled in the art should understand that various modules and steps in the embodiments of the disclosure may be implemented with universal computing apparatus, integrated in a single computing apparatus or distributed on a network constituted by multiple computing apparatus. Optionally, they may be implemented with programme codes which can be executed by the computing apparatus, therefore stored in a storage apparatus and executed by the computing apparatus. In some situations, the illustrated or depicted steps may be executed in an order different from that herein, or implemented as different IC modules; otherwise, a number of the modules or steps therefrom may be implemented as a single IC module. In this way, the embodiments of the disclosure are not limited to any particular combination of hardware and software.

Those embodiments described above are merely specific implementations of the disclosure, not to variation limit the disclosure in any way. Any simple modification, equivalence or variation to above implementation according to the technical essence of the disclosure is still in the scope of the technical solution of the disclosure. The scope of protection is defined by the claims.

## Claims

1. A method of multi-path reception and combination, **characterized by** selecting (603, 702), from a plurality of branches, each branch at a time, for receiving a communication signal, and reading (604, 703) a channel parameter of the channel on which the branch operates, wherein the channel parameter of the channel on which the branch operates comprises channel type and channel mode of a channel on which the branch operates;
in the case of the channel type of the channel on which the branch operates being a High Speed Dedicated Physical Control Channel, HS-DPCCH and the channel on which the branch operates being in Boosting channel mode, receiving a ratio parameter issued from an external device to be the weighting coefficient of the branch;
in the case of the channel type of the channel on which the branch operates being a HS-DPCCH and the channel on which the branch operates not being in the Boosting channel mode, descrambling and despreading the communication signal received via the branch, performing accurate channel estimation on the communication signal which has been descrambled and despread, and regarding the obtained accurate channel estimation value as the weighting coefficient of the branch; and
performing (606) Maximum-Ratio Combination on the communication signal received via the respective branches using the weighting coefficients of the determined respective branches.

2. The method of multi-path reception and combination according to claim 1, further comprising: when the channel type of the channel on which the branch operates is a dedicated physical control channel, DPCCH,
descrambling and despreading the communication signal received via the branch;
performing coarse channel estimation on the communication signal which has been descrambled and despread, so as to obtain a coarse channel estimation value; and
regarding the corresponding coarse channel estimation value as the weighting coefficient of the branch according to the channel mode of the channel on which the branch operates.

3. The method of multi-path reception and combination according to claim 2, wherein the coarse channel estimation value comprises pilot coarse channel estimation value and non-pilot coarse channel estimation value, the channel mode of the channel on which the branch operates comprises pilot mode and non-pilot mode;
the regarding the corresponding coarse channel estimation value as the weighting coefficient of the branch according to the channel mode of the channel on which the branch operates comprises:
when the channel mode of the channel on which the branch operates is the pilot mode, regarding the pilot coarse channel estimation value as the weighting coefficient of the branch; when the channel mode of the channel on which the branch operates is the non-pilot mode, regarding the non-pilot coarse channel estimation value as the weighting coefficient of the branch.

4. The method of multi-path reception and combination according to any of claims 1 to 3, further comprising: when the channel type of the channel on which the branch operates is an enhanced dedicated physical control channel, E-DPCCH,
descramble descrambling and despreading the communication signal received via the branch;
performing accurate channel estimation on the communication signal which has been descrambled and despread, so as to obtain an accurate channel estimation value and regarding the accurate channel estimation value as the weighting coefficient of the branch.

5. An apparatus (111) of multi-path reception and combination, comprising a communication signal reception module (1111), a weighting coefficient calculation module (1112) and a multi-path combination module (1113) which are connected in sequence; **characterized in that**,
the communication signal reception module (1111) is configured to receive a communication signal sent from a mobile terminal via a plurality of branches;
the weighting coefficient calculation module (1112) is configured to read a channel parameter of the channel on which the branch operates, wherein the channel parameter of the channel on which the branch operates comprises channel type and channel mode of a channel on which the branch operates; receive a ratio parameter issued from an external device to be the weighting coefficient of the branch in the case of the channel type of the channel on which the branch operates being a High Speed Dedicated Physical Control Channel, HS-DPCCH and the channel on which the branch operates being in Boosting channel mode; descramble and despread the communication signal received via the branch, perform accurate channel estimation on the communication signal which has been descrambled and despread, and regard the obtained accurate channel estimation value as the weighting coefficient of the branch in the case of the channel type of the channel on which the branch operates being a HS-DPCCH and the channel on which the branch operates being not in the Boosting channel mode; and
the multi-path combination module (1113) is configured to perform Maximum-Ratio Combination on the communication signal received via the respective branches using the weighting coefficients of the respective branches.

6. The apparatus (111) of multi-path reception and combination according to claim 5, wherein the weighting coefficient calculation module (1112) is further configured to,
when the channel type of the channel on which the branch operates is a dedicated physical control channel, DPCCH,
descramble and despread the communication signal received via the branch;
perform coarse channel estimation on the communication signal which has been descrambled and despread, so as to obtain a coarse channel estimation value; and
regard the corresponding coarse channel estimation value as the weighting coefficient of the branch according to the channel mode of the channel on which the branch operates.

7. The apparatus (111) of multi-path reception and combination according to claim 6, wherein the coarse channel estimation value comprises pilot coarse channel estimation value and non-pilot coarse channel estimation value, the channel mode of the channel on which the branch operates comprises pilot mode and non-pilot mode; and
wherein the weighting coefficient calculation module (1112) is further configured to, when the channel mode of the channel on which the branch operates is the pilot mode, regard the pilot coarse channel estimation value as the weighting coefficient of the branch; when the channel mode of the channel on which the branch operates is the non-pilot mode, regard the non-pilot coarse channel estimation value as the weighting coefficient of the branch.

8. The apparatus (111) of multi-path reception and combination according to any one of claims 5-7, wherein the weighting coefficient calculation module (1112) is further configured to, when the channel type of the channel on which the branch operates is an enhanced dedicated physical control channel, E-DPCCH,
descramble and despread the communication signal received via the branch;
perform accurate channel estimation on the communication signal which has been descrambled and despread, so as to obtain an accurate channel estimation value and regard the accurate channel estimation value as the weighting coefficient of the branch.

9. A mobile communication system (1), comprising at least mobile terminal (12) and at least communication base station (11), **characterized in that**, the communication base station (11) comprises a body (112) for realizing its basic communication functions and a multi-path reception and combination apparatus (111) according to any one of claims 5-8; wherein the communication base station (11) receives and processes a communication signal sent from the mobile terminal (12) using the multi-path reception and combination apparatus (111).

## Patentansprüche

1. Mehrpfad-Empfangs- und -Kommunikationsverfahren, **gekennzeichnet durch**
Auswählen (603, 702) aus einer Mehrzahl von Zweigen Zweig für Zweig zum Empfangen eines Kommunikationssignals und Lesen (604, 703) eines Kanalparameters des Kanals, auf dem der Zweig arbeitet, wobei der Kanalparameter des Kanals, auf dem der Zweig arbeitet, einen Kanaltyp und einen Kanalmodus eines Kanals, auf dem der Zweig arbeitet, umfasst;
wenn der Kanaltyp des Kanals, auf dem der Zweig arbeitet, ein High Speed Dedicated Physical Control Channel, HS-DPCCH, ist, und der Kanal, auf dem der Zweig arbeitet, im Boosting-Kanalmodus arbeitet, Empfangen eines Verhältnisparameters, der von einer externen Einrichtung ausgegeben wird, als Gewichtungskoeffizient des Zweigs;
wenn der Kanaltyp des Kanals, auf dem der Zweig arbeitet, ein HS-DPCCH ist, und der Kanal, auf dem der Zweig arbeitet, nicht im Boosting-Kanalmodus arbeitet, Entschlüsseln und Entspreizen des Kommunikationssignals, das über den Zweig empfangen wurde, Durchführen einer genauen Kanalschätzung am Kommunikationssignal, das entschlüsselt und entspreizt wurde, und Ansehen des erhaltenen Werts der genauen Kanalschätzung als Gewichtungskoeffizient des Zweigs; und
Durchführen (606) eines Maximum Ratio Combining am Kommunikationssignal, das über die jeweiligen Zweige empfangen wurde, unter Verwendung der Gewichtungskoeffizienten der ermittelten jeweiligen Zweige.

2. Mehrpfad-Empfangs- und -Kombinationsverfahren nach Anspruch 1, das des Weiteren umfasst: wenn der Kanaltyp des Kanals, auf dem der Zweig arbeitet, ein Dedicated Physical Control Channel, DPCCH, ist,
Entschlüsseln und Entspreizen des Kommunikationssignals, das über den Zweig empfangen wurde;
Durchführen einer groben Kanalschätzung am Kommunikationssignal, das entschlüsselt und entspreizt wurde, um einen Wert der groben Kanalschätzung zu erhalten; und
Ansehen des entsprechenden Werts der groben Kanalschätzung als Gewichtungskoeffizient des Zweigs gemäß dem Kanalmodus des Kanals, auf dem der Zweig arbeitet.

3. Mehrpfad-Empfangs- und -Kombinationsverfahren nach Anspruch 2, wobei der Wert der groben Kanalschätzung einen Pilotwert der groben Kanalschätzung und einen Nicht-Pilotwert der groben Kanalschätzung umfasst, wobei der Kanalmodus des Kanals, auf dem der Zweig arbeitet, einen Pilotmodus und einen Nicht-Pilotmodus umfasst;
wobei das Ansehen des entsprechenden Wertes der groben Kanalschätzung als Gewichtungskoeffizient des Zweigs gemäß dem Kanalmodus des Kanals, auf dem der Zweig arbeitet, umfasst:
wenn der Kanalmodus des Kanals, auf dem der Zweig arbeitet, der Pilotmodus ist, Ansehen des Pilotwerts der groben Kanalschätzung als Gewichtungskoeffizient des Zweigs; wenn der Kanalmodus des Kanals, auf dem der Zweig arbeitet, der Nicht-Pilotmodus ist, Ansehen des Nicht-Pilot-Werts der groben Kanalschätzung als Gewichtungskoeffizient des Zweigs.

4. Mehrpfad-Empfangs- und -Kombinationsverfahren nach einem der Ansprüche 1 bis 3, das des Weiteren umfasst: wenn der Kanaltyp des Kanals, auf dem der Zweig arbeitet, ein Enhanced Dedicated Physical Control Channel, E-DPCCH, ist,
Entschlüsseln Entschlüsseln und Entspreizen des Kommunikationssignals, das über den Zweig empfangen wurde;
Durchführen einer genauen Kanalschätzung am Kommunikationssignal, das entschlüsselt und entspreizt wurde, um einen Wert der genauen Kanalschätzung zu erhalten, und Ansehen des Werts der genauen Kanalschätzung als Gewichtungskoeffizient des Zweigs.

5. Mehrpfad-Empfangs- und -Kommunikationsvorrichtung (111), die ein Kommunikationssignalempfangsmodul (1111), ein Gewichtungskoeffizientberechnungsmodul (1112) und ein Mehrpfad-Kombinationsmodul (1113) umfasst, die in Reihe geschaltet sind;
**dadurch gekennzeichnet, dass**
das Kommunikationssignalempfangsmodul (1111) so konfiguriert ist, dass es ein Kommunikationssignal empfängt, das von einem mobilen Endgerät gesendet wurde, über eine Mehrzahl von Zweigen;
das Gewichtungskoeffizientberechnungsmodul (1112) so konfiguriert ist, dass es einen Kanalparameter des Kanals liest, auf dem der Zweig arbeitet, wobei der Kanalparameter des Kanals, auf dem der Zweig arbeitet, einen Kanaltyp und einen Kanalmodus eines Kanals umfasst, auf dem der Zweig arbeitet; dass es einen Verhältnisparameter empfängt, der von einer externen Einrichtung ausgegeben wird, als Gewichtungskoeffizient des Zweigs, wenn der Kanaltyp des Kanals, auf dem der Zweig arbeitet, ein High Speed Dedicated Physical Control Channel, HS-DPCCH, ist, und der Kanals, auf dem der Zweig arbeitet, im Boosting-Kanalmodus arbeitet; dass es das Kommunikationssignal, das über den Zweig empfangen wurde, entschlüsselt und entspreizt, dass es eine genaue Kanalschätzung des Kommunikationssignals durchführt, das entschlüsselt und entspreizt wurde, und dass er den erhaltenen Wert der genauen Kanalschätzung als Gewichtungskoeffizient des Zweigs ansieht, wenn der Kanaltyp des Kanals, auf dem der Zweig arbeitet, ein HS-DPCCH ist, und der Kanal, auf dem der Zweig arbeitet, nicht im Boosting-Kanalmodus ist; und
das Mehrpfad-Kombinationsmodul (1113) so konfiguriert ist, dass es ein Maximum Ratio Combining am Kommunikationssignal, das über die jeweiligen Zweige empfangen wurde, unter Verwendung der Gewichtungskoeffizienten der jeweiligen Zweige durchführt.

6. Mehrpfad-Empfangs- und -Kombinationsvorrichtung (111) nach Anspruch 5, wobei das Gewichtungskoeffizientberechnungsmodul (1112) des Weiteren so konfiguriert ist, dass es,
wenn der Kanaltyp des Kanals, auf dem der Zweig arbeitet, ein Dedicated Physical Control Channel, DPCCH, ist,
das Kommunikationssignal, das über den Zweig empfangen wurde, entschlüsselt und entspreizt;
eine grobe Kanalschätzung am Kommunikationssignal durchführt, das entschlüsselt und entspreizt wurde, um einen Wert der groben Kanalschätzung zu erhalten; und
den entsprechenden Wert der groben Kanalschätzung als Gewichtungskoeffizient des Zweigs gemäß dem Kanalmodus des Kanals ansieht, auf dem der Zweig arbeitet.

7. Mehrpfad-Empfangs- und -Kombinationsvorrichtung (111) nach Anspruch 6, wobei der Wert der groben Kanalschätzung einen Pilotwert der groben Kanalschätzung und einen Nicht-Pilotwert der groben Kanalschätzung umfasst, wobei der Kanalmodus des Kanals, auf dem der Zweig arbeitet, einen Pilotmodus und einen Nicht-Pilotmodus umfasst; und
wobei das Gewichtungskoeffizientberechnungsmodul (1112) des Weiteren so konfiguriert ist, dass es, wenn der Kanalmodus des Kanals, auf dem der Zweig arbeitet, der Pilotmodus ist, den Pilotwert der groben Kanalschätzung als Gewichtungskoeffizient des Zweigs ansieht; wenn der Kanalmodus des Kanals, auf dem der Zweig arbeitet, der Nicht-Pilotmodus ist, den Nicht-Pilot-Wert der groben Kanalschätzung als Gewichtungskoeffizient des Zweigs ansieht.

8. Mehrpfad-Empfangs- und -Kombinationsvorrichtung (111) nach einem der Ansprüche 5 bis 7, wobei das Gewichtungskoeffizientberechnungsmodul (1112) des Weiteren so konfiguriert ist, dass, wenn der Kanaltyp des Kanals, auf dem der Zweig arbeitet, ein Enhanced Dedicated Physical Control Channel, E-DPCCH, ist,
das Kommunikationssignal, das über den Zweig empfangen wurde, entschlüsselt und entspreizt;
eine genaue Kanalschätzung am Kommunikationssignal, das entschlüsselt und entspreizt wurde, durchführt, um einen Wert der genauen Kanalschätzung zu erhalten, und den Wert der genauen Kanalschätzung als Gewichtungskoeffizient des Zweigs ansieht.

9. Mobiles Kommunikationssystem (1), das zumindest ein mobiles Endgerät (12) und zumindest eine Kommunikationsbasisstation (11) umfasst, **dadurch gekennzeichnet, dass** die Kommunikationsbasisstation (11) einen Körper (112) zum Umsetzen ihrer Kommunikationsgrundfunktionen und eine Mehrpfad-Empfangs- und -Kommunikationsvorrichtung (111) nach einem der Ansprüche 5 bis 8 umfasst; wobei die Kommunikationsbasisstation (11) ein Kommunikationssignal empfängt und verarbeitet, das vom mobilen Endgerät (12) gesendet wurde, unter Verwendung der Mehrpfad-Empfangs- und -Kombinationsvorrichtung (111).

## Revendications

1. Procédé de combinaison et de réception multitrajets, **caractérisé par** les étapes ci-dessous consistant à :
sélectionner (603, 702), parmi une pluralité de branches, chaque branche individuellement, en vue de recevoir un signal de communication, et lire (604, 703) un paramètre de canal du canal sur lequel la branche fonctionne, dans lequel le paramètre de canal du canal sur lequel la branche fonctionne comprend un type de canal et un mode de canal d'un canal sur lequel la branche fonctionne ;
dans le cas où le type de canal du canal sur lequel la branche fonctionne correspond à un canal de commande physique dédié à haut débit, HS-DPCCH, et où le canal sur lequel la branche fonctionne est en mode de canal d'amplification, recevoir un paramètre de rapport, émis à partir d'un dispositif externe, destiné à être le coefficient de pondération de la branche ;
dans le cas où le type de canal du canal sur lequel la branche fonctionne correspond à un canal HS-DPCCH et où le canal sur lequel la branche fonctionne n'est pas dans le mode de canal d'amplification, désembrouiller et désétaler le signal de communication reçu par le biais de la branche, mettre en oeuvre une estimation de canal précise sur le signal de communication qui a été désembrouillé et désétalé, et considérer la valeur d'estimation de canal précise obtenue comme étant le coefficient de pondération de la branche ; et
mettre en oeuvre (606) une combinaison à rapport maximal sur le signal de communication reçu par le biais des branches respectives en utilisant les coefficients de pondération des branches respectives déterminées.

2. Procédé de combinaison et de réception multitrajets selon la revendication 1, comprenant en outre les étapes ci-dessous consistant à : lorsque le type de canal du canal sur lequel la branche fonctionne correspond à un canal de commande physique dédié, DPCCH,
désembrouiller et désétaler le signal de communication reçu par le biais de la branche ;
mettre en oeuvre une estimation de canal grossière sur le signal de communication qui a été désembrouillé et désétalé, en vue d'obtenir une valeur d'estimation de canal grossière ; et
considérer la valeur d'estimation de canal grossière correspondante comme étant le coefficient de pondération de la branche selon le mode de canal du canal sur lequel la branche fonctionne.

3. Procédé de combinaison et de réception multitrajets selon la revendication 2, dans lequel la valeur d'estimation de canal grossière comprend une valeur d'estimation de canal grossière pilote et une valeur d'estimation de canal grossière non-pilote, et le mode de canal du canal sur lequel la branche fonctionne comporte un mode pilote et un mode non pilote ;
dans lequel l'étape consistant à considérer la valeur d'estimation de canal grossière correspondante comme étant le coefficient de pondération de la branche selon le mode de canal du canal sur lequel la branche fonctionne comporte les étapes ci-dessous consistant à :
lorsque le mode de canal du canal sur lequel la branche fonctionne est le mode pilote, considérer la valeur d'estimation de canal grossière pilote comme étant le coefficient de pondération de la branche ; lorsque le mode de canal du canal sur lequel la branche fonctionne est le mode non pilote, considérer la valeur d'estimation de canal grossière non pilote comme étant le coefficient de pondération de la branche.

4. Procédé de combinaison et de réception multitrajets selon l'une quelconque des revendications 1 à 3, comprenant en outre les étapes ci-dessous consistant à : lorsque le type de canal du canal sur lequel la branche fonctionne correspond à un canal de commande physique dédié amélioré, E-DPCCH,
désembrouiller et désétaler le signal de communication reçu par le biais de la branche ;
mettre en oeuvre une estimation de canal précise sur le signal de communication qui a été désembrouillé et désétalé, en vue d'obtenir une valeur d'estimation de canal précise, et considérer la valeur d'estimation de canal précise comme étant le coefficient de pondération de la branche.

5. Appareil (111) de combinaison et de réception multitrajets, comprenant un module de réception de signal de communication (1111), un module de calcul de coefficient de pondération (1112) et un module de combinaison multitrajet (1113) qui sont connectés en séquence ;
**caractérisé en ce que** :
le module de réception de signal de communication (1111) est configuré de manière à recevoir un signal de communication envoyé par un terminal mobile par le biais d'une pluralité de branches ;
le module de calcul de coefficient de pondération (1112) est configuré de manière à lire un paramètre de canal du canal sur lequel la branche fonctionne, dans lequel le paramètre de canal du canal sur lequel la branche fonctionne comprend un type de canal et un mode de canal d'un canal sur lequel la branche fonctionne ; recevoir un paramètre de rapport, émis à partir d'un dispositif externe, destiné à être le coefficient de pondération de la branche dans le cas où le type de canal du canal sur lequel la branche fonctionne correspond à un canal de commande physique dédié à haut débit, HS-DPCCH, et où le canal sur lequel la branche fonctionne est en mode de canal d'amplification ; désembrouiller et désétaler le signal de communication reçu par le biais de la branche, mettre en oeuvre une estimation de canal précise sur le signal de communication qui a été désembrouillé et désétalé, et considérer la valeur d'estimation de canal précise obtenue comme étant le coefficient de pondération de la branche dans le cas où le type de canal du canal sur lequel la branche fonctionne correspond à un canal HS-DPCCH et où le canal sur lequel la branche fonctionne n'est pas dans le mode de canal d'amplification ; et
le module de combinaison multitrajet (1113) est configuré de manière à mettre en oeuvre une combinaison à rapport maximal sur le signal de communication reçu par le biais des branches respectives en utilisant les coefficients de pondération des branches respectives.

6. Appareil (111) de combinaison et de réception multitrajets selon la revendication 5, dans lequel le module de calcul de coefficient de pondération (1112) est en outre configuré de manière à,
lorsque le type de canal du canal sur lequel la branche fonctionne correspond à un canal de commande physique dédié, DPCCH,
désembrouiller et désétaler le signal de communication reçu par le biais de la branche ;
mettre en oeuvre une estimation de canal grossière sur le signal de communication qui a été désembrouillé et désétalé, en vue d'obtenir une valeur d'estimation de canal grossière ; et
considérer la valeur d'estimation de canal grossière correspondante comme étant le coefficient de pondération de la branche selon le mode de canal du canal sur lequel la branche fonctionne.

7. Appareil (111) de combinaison et de réception multitrajets selon la revendication 6, dans lequel la valeur d'estimation de canal grossière comporte une valeur d'estimation de canal grossière pilote et une valeur d'estimation de canal grossière non-pilote, dans lequel le mode de canal du canal sur lequel la branche fonctionne comporte un mode pilote et un mode non pilote ; et
dans lequel le module de calcul de coefficient de pondération (1112) est en outre configuré de manière à, lorsque le mode de canal du canal sur lequel la branche fonctionne est le mode pilote, considérer la valeur d'estimation de canal grossière pilote comme étant le coefficient de pondération de la branche ; lorsque le mode de canal du canal sur lequel la branche fonctionne est le mode non pilote, considérer la valeur d'estimation de canal grossière non pilote comme étant le coefficient de pondération de la branche.

8. Appareil (111) de combinaison et de réception multitrajets selon l'une quelconque des revendications 5 à 7, dans lequel le module de calcul de coefficient de pondération (1112) est en outre configuré de manière à, lorsque le type de canal du canal sur lequel la branche fonctionne correspond à un canal de commande physique dédié amélioré, E-DPCCH,
désembrouiller et désétaler le signal de communication reçu par le biais de la branche ;
mettre en oeuvre une estimation de canal précise sur le signal de communication qui a été désembrouillé et désétalé, en vue d'obtenir une valeur d'estimation de canal précise, et considérer la valeur d'estimation de canal précise comme étant le coefficient de pondération de la branche.

9. Système de communication mobile (1), comportant au moins un terminal mobile (12) et au moins une station de base de communication (11), **caractérisé en ce que**, la station de base de communication (11) comporte un corps (112) pour réaliser ses fonctions de communication de base et un appareil de combinaison et de réception multitrajets (111) selon l'une quelconque des revendications 5 à 8 ; dans lequel la station de base de communication (11) reçoit et traite un signal de communication envoyé à partir du terminal mobile (12) en utilisant l'appareil de combinaison et de réception multitrajets (111).
